# EUROPEAN PATENT APPLICATION

(11) **EP 4 140 309 A1**
(43) Date of publication of application: **01.03.2023**
(21) Application number: 22188983.5
(22) Date of filing: 12.09.2012
(51) Int. Cl.: A22C 7/00, A22C 17/00, B02C 18/36, F41A 21/36

(54) **SYSTEM AND METHOD FOR CREATING A VENTURI EFFECT WITHIN AN ORIFICE**

(30) Priority: 12.09.2011 US 201113199910; 27.12.2011 US 201113374421; 27.12.2011 US 201113374422; 27.12.2011 US 201113374423; 28.12.2011 US 201113374417; 29.12.2011 US 201113374441
(62) Divisional of application: 12831539.7
(71) Applicant: Wolff, James B., Portland, OR 97206 (US)
(72) Inventor: Wolff, James B., Portland, OR 97206 (US)
(74) Representative: Murgitroyd & Company

(57) **Abstract**

A device and method for creating a venturi effect through an orifice, the orifice (72, 74) comprised of a spherical section (76) intersecting a cylinder (78) which creates a venturi effect, said device having a single opening on top of said spherical section (76), a single opening between said spherical section (76) and said cylinder (78), a single opening on a bottom of said cylinder (78), said orifice changing size from a larger diameter to a smaller diameter, such that there is a reduction in cross-sectional area through the orifice from the top of said spherical section (76) to the bottom of said cylinder (78).

## Description

### Field of the Invention

The present invention relates to an apparatus and method for creating a venturi effect within an orifice.

### Background of the Invention

Current forming technology for food products, relies on high pressure, speed and complicated material flow pathways which produce a product lacking in quality. High pressure works the meat cells, the higher the pressure the more massaging or squeezing of the meat cells takes place. High speed combined with a complicated flow path massages and works the meat product, releasing myosin/actin from the cells causing the muscle fiber to bind together and contract (protein bind).

Prior art devices such as hydraulics, and guns, which require liquids and gases to change direction have issues with energy loss.

### Summary of the Invention

The present invention relates to an apparatus and method for creating a venturi effect. It is an object of the present invention for the apparatus and method to be used with solids, liquids and gases. It is an object of the present invention for the venturi effect to increase acceleration of a product, and decrease pressure of a product. It is an object of the present invention for the venturi effect to decrease acceleration and increase pressure. It is an object of the present invention for the venturi effect to be created by an orifice. It is an object of the present invention for the venturi effect to be created within a pipe. It is an object of the present invention for the venturi effect of the orifice to stretch and align fibers of a product. It is an object of the present invention for a hole or orifice to change size from a larger to a smaller diameter with vertical or concave sides. It is an object of the present invention for the sides to have a sharp edge. The principle has design similarities to a venturi. It is referred to as a nozzle, venturi, orifice, or a restriction to flow which results in product acceleration with a corresponding pressure drop through the orifice.

By reducing the diameter of a tube through which a substance passes, the velocity is increased. This is the principle of Conservation of Mass. When the velocity increases the pressure of the material is reduced. This is the principle of the Conservation of Energy.

For every liquid, there is a ratio between the cross-sectional area (C) and the cross-sectional area (c) through which velocity can only be increased by reducing temperature or increasing pressure. This same concept applies to ground meat. It is impossible to attain choked flow unless there is a transition between the orifices and the small orifice has a finite length.

A venturi allows a smooth transition from a larger orifice to a smaller one. This transition minimizes flow transitions and thereby reduces restrictions in the system. The transition minimizes energy loss and supports fiber alignment.

The transition in a venturi is extremely difficult to create in a production tooling environment. As a result, using the geometric properties of a sphere or similar shape allows the ability to obtain many of the venturi effect properties using standard production practices.

All points on a sphere are the same distance from a fixed point. Contours and plane sections of spheres are circles. Spheres have the same width and girth. Spheres have maximum volume with minimum surface area. All of the above properties allow a product to flow with minimum interruptions. There are no static or dead zones. No matter what angle the cylinder intersects the sphere, the cross section is always a perfect circle.

It is an object of the present invention to increase product velocity forcing linear fiber alignment.

Air flow can be accelerated by using a system which will reduce the cylinder size. Using the equation from Bernoulli's law of A₁V₁=A₂V₂, the velocity is increased by reducing the cross sectional area.

The typical way of accomplishing this is the use of a venturi nozzle. However, a venturi requires a gradual area reduction and a finite length throat. Given the restrictions in the thickness in most mechanical pieces, it is not feasible to put a venturi in such a piece of equipment.

However, utilizing the properties of a sphere, the air can achieve acceleration by intersecting a cylinder with a sphere of a larger diameter.

In a sphere pressure is equal in all directions. Therefore, when the sphere is intersected by a cylinder, the air will move in a direction coaxial with the cylinder at a high velocity.

It is an object of the present invention to provide a venturi effect in the hole by creating a sphere to cylinder hole. This creates a venturi effect or a venturi pump. This accelerates the product through the hole. It is an object of the invention for this to create a self-cleaning hole or orifice. The spherical cut creates equal pressure in all directions. It is an object of the present invention for the spherical hemisphere or curved structure to have a diameter ratio to a diameter ratio of a connected cylindrical portion which is no greater than the choke flow for the liquid gas or solid used. It is an object of the present invention for the diameter of the spherical hemisphere or curved structure to be greater than the diameter of the connected cylindrical portion. It is an object of the present invention for the spherical hemisphere or curved structure to have a diameter between 1.1 to 2.5 times greater than a cylindrical portion which intersects the same. It is preferred to have a sharper edge from the edge to the hole.

One example of the present invention is to use the venturi effect in holes within a breather plate of a meat patty machine. The breather plate includes at least one air pressure release passage, wherein a plurality of small breather holes enable the cavities of the mold plate to fluidly communicate with the passage. The air passage enables air in the cavities to escape as the machine pumps the cavities full of meat. In the case of the current breather plate, the holes are cylindrical and vary in number of holes and diameters.

A further example of the use of the holes having the venturi effect is a grinder plate or orifice plate of a grinding machine. Use of the grinder plate having the orifices of the present invention improves fiber alignment.

A further example of the use of the orifices having the venturi effect is a fill plate which has fill orifices to define paths through the fill plate, wherein some of the paths each have a path portion obliquely angled or perpendicular to the fill side of the mold plate. The paths comprise spherical intersections or a curved structure. The side of the fill plate which is in contact with the stripper plate comprises a spherical hemisphere or curved structure which has a diameter which is no greater than the choke flow for the liquid gas or solid used and is no less than the diameter of the connected cylindrical portion., and intersects the top of the mold plate perpendicularly or at an angle of less than or equal to about +/-75 degrees, or about +/- 45 degrees in a preferred embodiment as measured from vertical in the longitudinal direction of the mold plate. By a reduction in the diameter a "venturi" condition is created. By using spherical sections or a curved structure, intersections between cylinder and spheres or curved structures create transitions which can be manufactured whose geometry approaches a venturi style system. It is preferred to have a sharper edge from the edge to the hole. It is an object of the present invention to make the edge sharper with a grinder. It is an object of the present invention for all fill paths to consist of a hemispherical shape which is intersected by a cylindrical shape at an angle less or equal to about +/- 75 degrees of vertical, and preferably about +/- 45 degrees of vertical.

It is an object of the present invention to use spherical geometry, with cylindrical intersections, and the ratio of the diameter of the sphere divided by the area of the cylinder is approximately 1.1 to 2.5 to create conditions to meat flow which maintain improved cell structure.

Irregular shapes do not have diameters, but they do have areas. For a given ratio of a linear item, the ratio becomes the square of the linear ratio. For curved and irregular shapes, the ratio of the initial area and the reduced area is from approximately 1.2 to 6.25.

A further object of the present invention is to use the venturi effect for hydraulics. There is friction created by a corner in a hydraulic which is decreased by the use of the sphere configuration and venturi effect. It is an object of the present invention to use this with a liquid.

It is an object of the present invention to use the venturi effect for gases. It is an object of the present invention for the venturi effect to create a deceleration and an increase in pressure. It is an object of the present invention to control the angle of the sphere. It is an object of the invention to use the venturi effect in a muzzle break gun.

### Brief Description of Drawings

Figure 1 shows a top view of the technology in place in the device of the present invention.
Figure 2 shows an enlarged cross-sectional view of the device of the present invention.
Figure 3 shows a drawing of the prior art design.
Figure 4 shows the technology used in an embodiment of a device of the present invention.
Figure 5 shows a side view of a device using the technology of the present invention.
Figure 6 shows the technology in an embodiment of the device of the present invention.
Figure 7 is a side view of the technology in an embodiment of the device of the present invention.
Figure 8 is a schematic showing an enlarged device of the present invention.
Figure 9 shows a top view of an embodiment of the device of the present invention.
Figure 10 is an enlarged top view of an embodiment of the device of the present invention.
Figure 11 is a side view of an embodiment of the device of the present invention.
Figure 12 is an enlarged side view of an embodiment of the device of the present invention.
Figure 12A is a side cross-sectional view of an embodiment of the device of the present invention.
Figure 12B is a top view of an embodiment of the device of the present invention.
Figure 13 is a drawing of a hydraulic fitting embodiment of the present invention.
Figure 14 shows a cutaway view of the hydraulic fitting embodiment of claim 13.
Figure 15 shows a side view of a muzzle break embodiment of the present invention.
Figure 16 shows a cutaway view of the muzzle break embodiment of the present invention.
Figure 17 shows a cross-sectional view of an embodiment of the device of the present invention.
Figure 18 shows an enlarged view of Fig. 17.

### Detailed Description

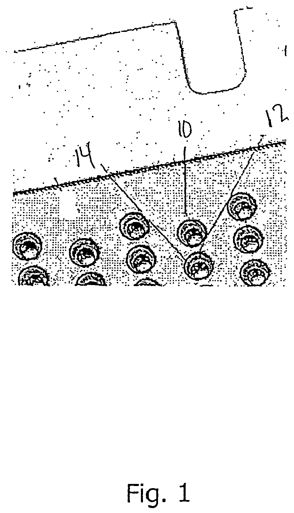

Figure 1 shows an orifice 10 having a spherical section 12 and a cylindrical section 14.

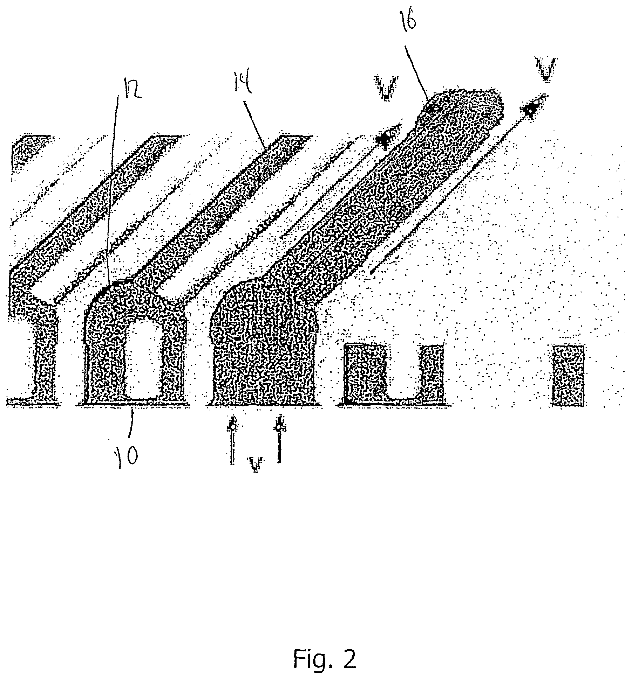

Figure 2 shows a side view of the device showing the orifice 10 having a spherical section 12 and a cylindrical section 14. Figure 2 further shows the product 16 within the spherical and cylindrical sections.

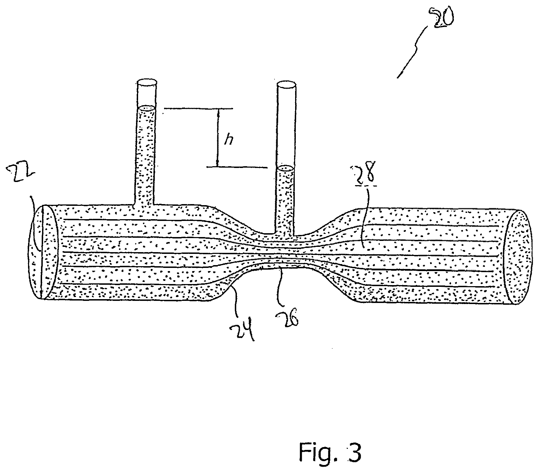

Figure 3 shows a prior art venturi 20 comprising a diameter 22 angle transition 24, throat length 26 and discharge 28.

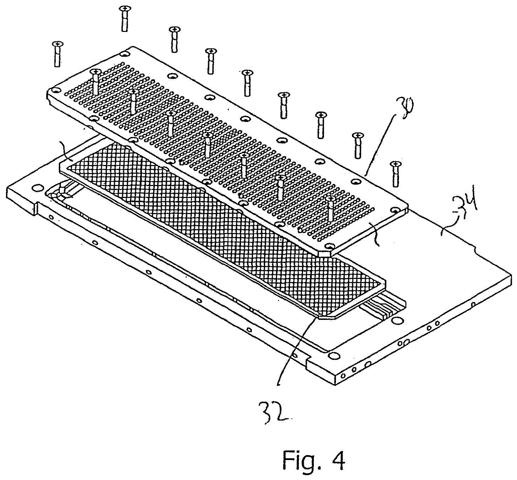

Figure 4 shows an unassembled view of a fill plate 30, stripper plate 32 and a top plate 34.

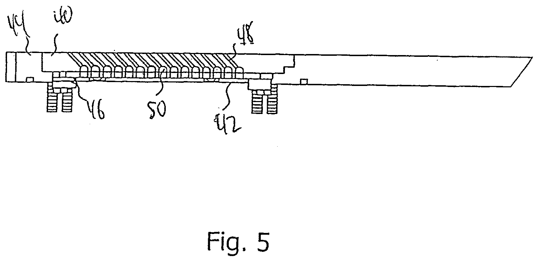

Figure 5 shows an assembled view of the fill plate 40, stripper plate 42 and top plate 44, further comprising a stripper plate spacer and hold down 46, a cylindrical section 48 and a curved section 50.

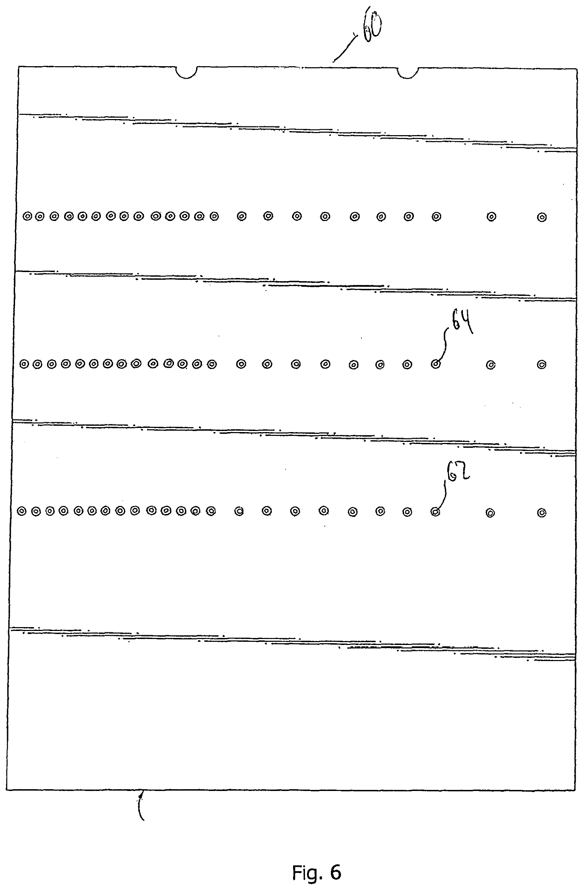

Figure 6 shows plate 60 having orifices 62 and 64 in the breather plate 60.

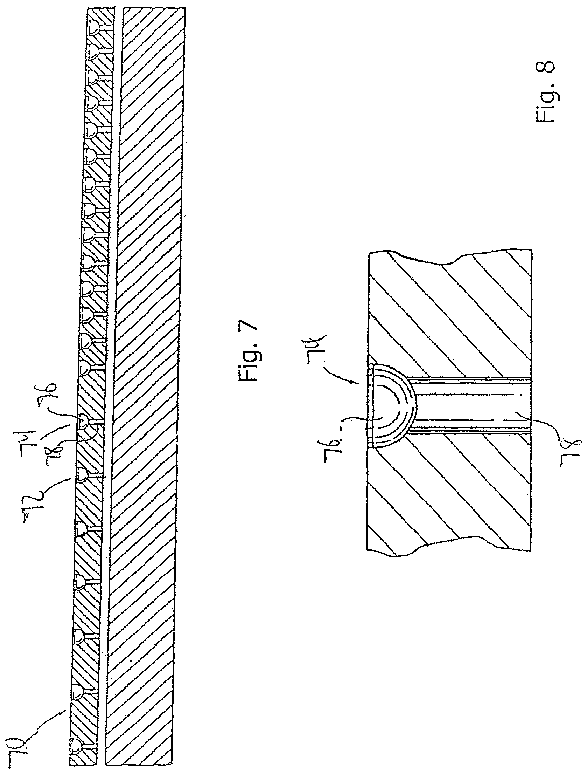

Figure 7 shows the breather plate 70 having orifices 72 and 74. The channels are made up of a spherical section 76 intersecting a cylindrical section 78.

Figure 8 further shows the orifice 74 having the spherical section 76 and a cylindrical section 78.

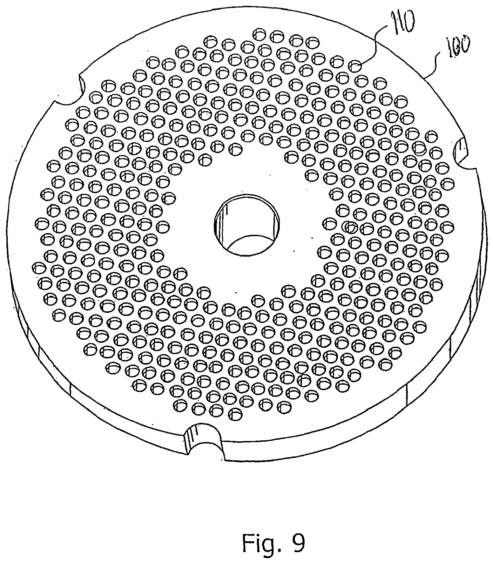

Figure 9 shows a grinder plate 100 having orifices 110.

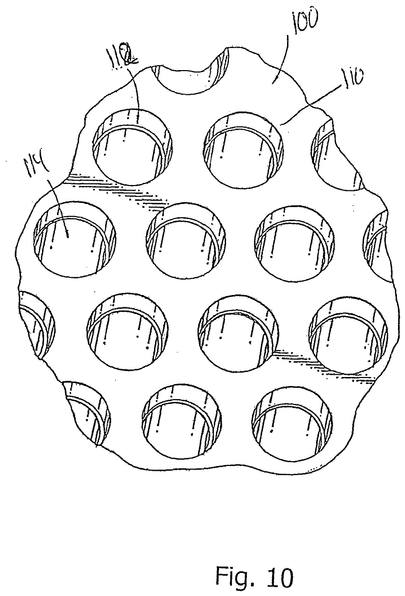

Figure 10 shows a magnified view of the grinder plate 100 showing the orifices 110, having sphere section 112 and a cylinder section 114.

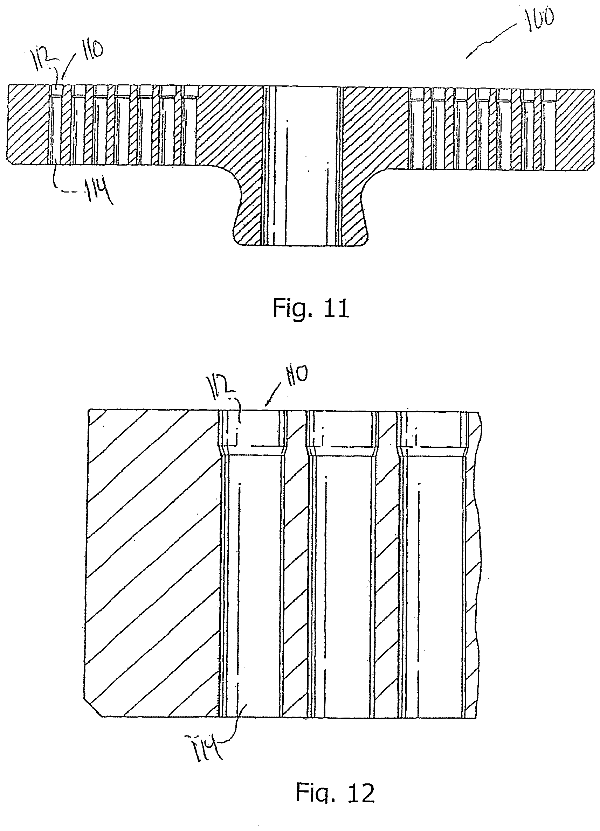

Figure 11 shows the grinder plate 100 having the orifices 110. The orifices comprising a sphere section 112 and a cylinder section 114.

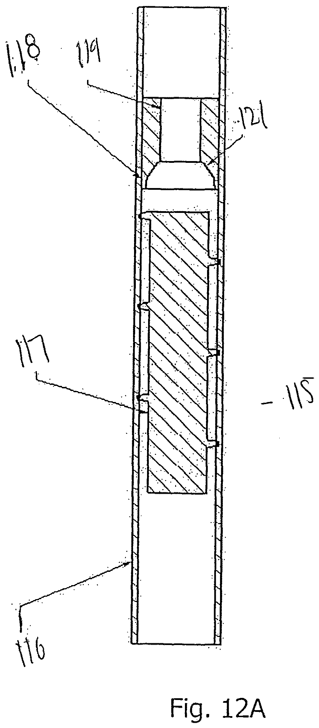

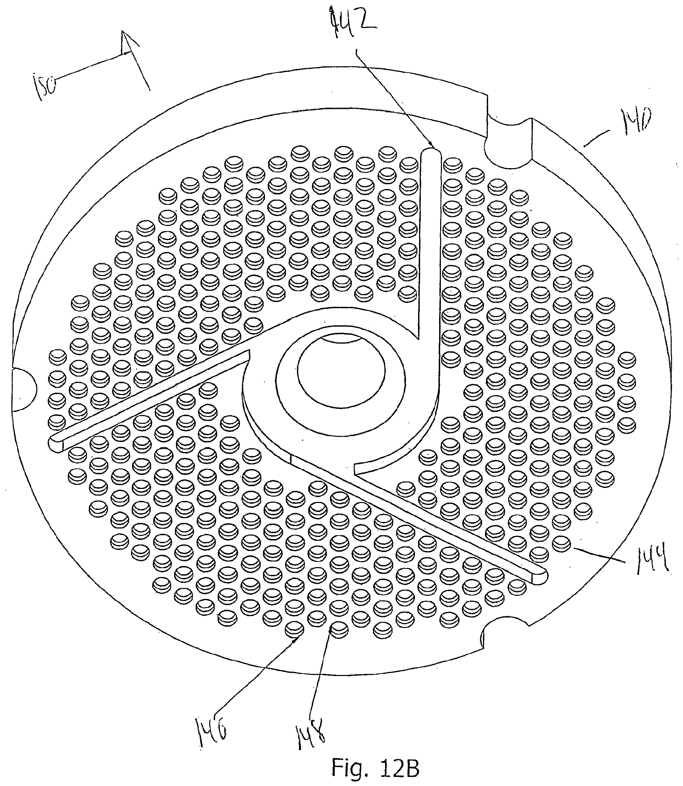

Figure 12 shows a magnified view of the orifices 110 having a spherical section 112 and a cylinder section 114.

Figure 12A shows a bone collector tube 116 which is comprised of a waste tube 116, waste auger 117, FOT bone extraction insert 118 which is comprised of a spherical section 121 and a cylindrical section 119.

Figure 12B shows a grinder plate 140 having bone collector slots 142, and orifices 144 which are comprised of a spherical diameter 146 and a cylindrical diameter 148, the arrow 150 shows the direction of the meat flow.

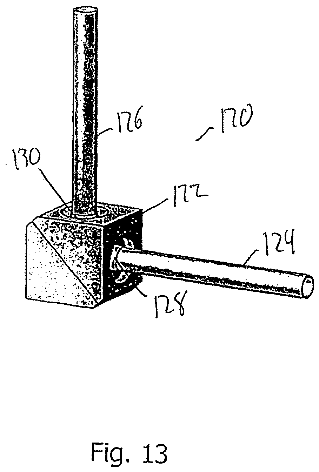

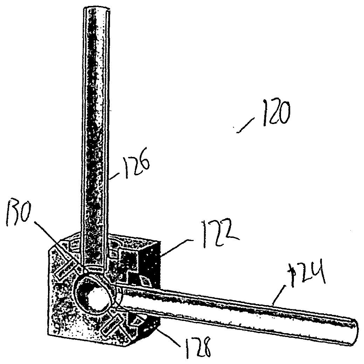

Figures 13 and 14 shows a hydraulic fitting 120 having an elbow 122, wherein two cylindrical pipes 124 and 126 enters spherical sections 128 and 130 respectively.

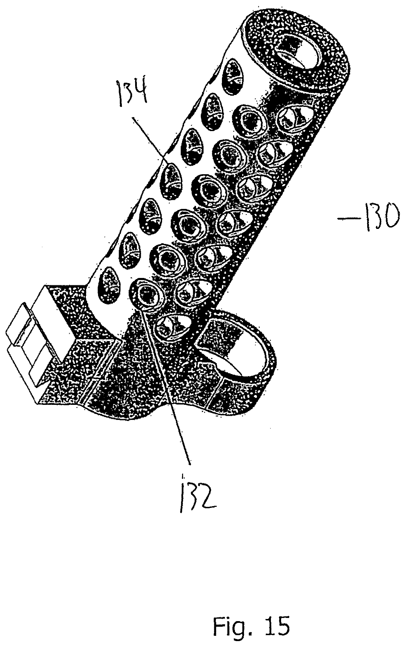

Figure 15 shows a muzzle break 130 having a cylindrical section 132 and a spherical section 134.

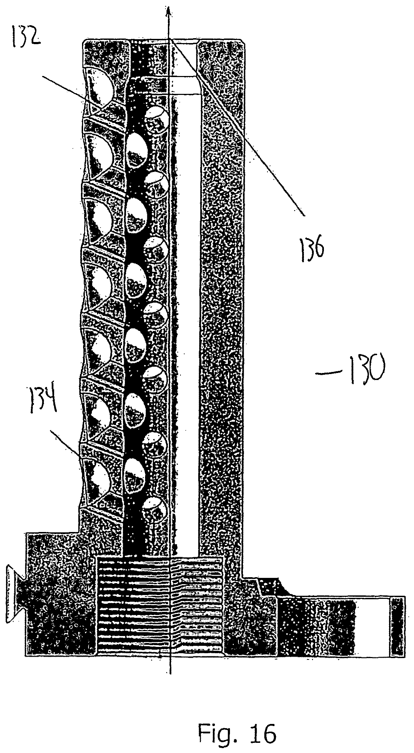

Figure 16 shows a cross section of a muzzle break 130 showing the direction of air flow 136, and cylindrical section 132 and spherical section 134.

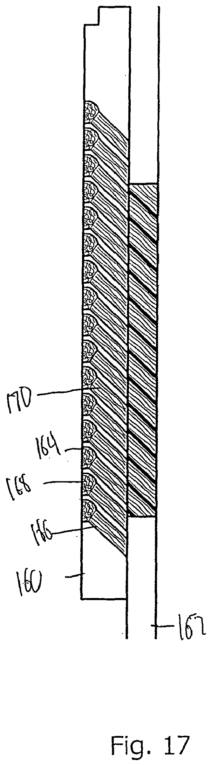

Figure 17 shows a fill plate 160 and a stripper plate 162 having a sphere 164 and a cylinder 166 showing the random fibers 168 when entering the venturi device and the aligned fibers 170, thereafter.

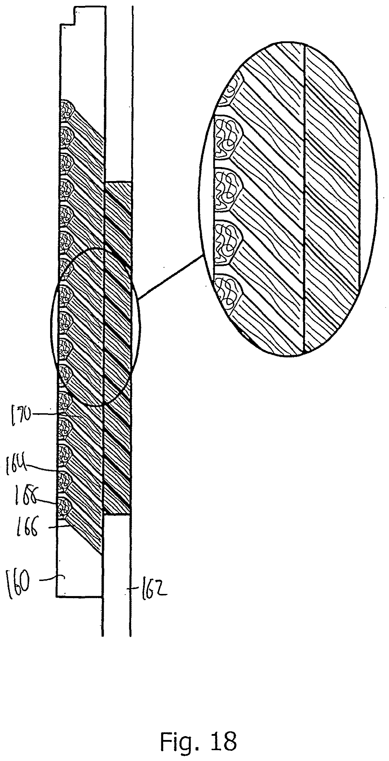

Figure 18 shows an enlarged view of Figure 17.

The present invention relates to fiber orientation technology. The fiber orientation technology drops pressure across the fill plate, aligns the fibers of meat so that the contraction of the muscle fiber that does take place is in a direction of choice. The fiber orientation technology provides a lower resistance to product flow using a wider opening.

The fiber orientation technology provides a better shear surface for a cleaner cut. The fiber orientation technology aligns the fibers in the hole so the shearing action disrupts as few muscle cells as possible. The fiber orientation technology decreases the total area of metal plate blocking the meat flow resulting in less direction change to the product which works the meat. The fiber orientation technology pulls the meat fiber through the hole instead of pushing using the principles of the venturi effect.

All of these characteristics of fiber orientation technology reduce the release and mixing of myosin with actin, the net effect is a controlled orientation of the fiber, less myosin activity.

A fill plate, interposed in the fill passage immediately adjacent to the mold plate has a multiplicity of fill orifices distributed in a predetermined pattern throughout an area aligned with the mold cavity when the mold plate is in fill position. The fill orifices define paths through the fill plate, wherein some of the paths each have a path portion obliquely angled or perpendicular to the fill side of the mold plate. The paths consist of spherical intersections or a curved structure. The side of the fill plate which is in contact with the stripper consists of a spherical hemisphere or curved structure which has a diameter which is no greater than the choke flow for the liquid gas or solid used and is no less than the diameter of the connected cylindrical portion, and intersects the top of the mold plate perpendicularly or at an angle of less than or equal to about +/-75 degrees, or about +/- 45 degrees in a preferred embodiment as measured from vertical in the longitudinal direction of the mold plate. By a reduction in the cross-sectional area a "venturi" condition is created. By using spherical sections or a curved structure, intersections between cylinder and spheres or curved structures create transitions which can be manufactured whose geometry approaches a venturi style system. All fill paths consist of a hemispherical shape which is intersected by a cylindrical shape at an angle less or equal to about +/- 75 degrees of vertical, and preferably about +/- 45 degrees of vertical.

The use of spherical geometry, with cylindrical intersections, and the ratio of the diameter of the sphere divided by the diameter of the cylinder is approximately 1.1 to 2.5 creates conditions to meat flow which maintain improved cell structure.

In the figure above a fluid enters at the left end of the tuber. Using conservation of mass and conservation of energy principles the volume rate of flow must be equal at all points in the systems. (ρ₁A₁V₁) ₌ (ρ₂A₂V₂). Since p is a constant, velocity is inversely proportional to cross sectional area. Also, a venturi requires a ramp of some finite distance and a throat which also has a finite distance.

A spherical geometry feeding into a circular cross section which creates a product velocity increased while maintaining more consistent pressure on the meat. A sphere has the following properties:
> All points on a sphere are the same distance from a fixed point.
> Contours and plane sections of spheres are circles.
> Spheres have the same width and girth.
> Spheres have maximum volume with minimum surface area.
> These properties allow meat to flow with minimum interruptions. There are no static or dead zones.
> No matter what angle the cylinder intersects the sphere; the cross section is always a perfect circle.
> Pressure inside of a sphere is uniform in all directions.

When a product is passed through a circular cross section of a sphere, the fact that pressure is uniform in a sphere creates forces which will be coaxial with the sphere. The reduction in area accelerates the product through the cylindrical section. The acceleration has been shown empirically to align fibers in a product in the primary direct of flow. Hence, there is fiber orientation.

Further aspects or embodiments of the present disclosure are detailed in the following numbered clauses:
1. A device comprising an orifice or piping comprised of a spherical section leading into a cylindrical section which creates a venturi effect.
2. The device of clause 1 wherein said venturi effect orients and/or aligns fibers of a material placed through said orifice.
3. The device of clause 1 wherein said venturi effect stretches a material drawn through said orifice.
4. The device of clause 1 wherein said orifice creates the lowest cross section through a material passing through said orifice.
5. The device of clause 1 wherein said orifice defines a path, and a plurality of said paths each have an outlet path portion at an angle of approximately 0 to 75 degrees from center of the orifice vertical axis.
6. The device of clause 1 wherein said orifices define a path, and a plurality of said paths each have an outlet path portion at an angle of approximately 0 to 45 degrees from center of the orifice vertical axis.
7. The device of clause 1 wherein said orifice have a spherical hemisphere or curved structure which has a diameter which is no greater than the choke flow for the liquid, gas or solid used and is no less than diameter of said connected cylindrical section.
8. The device of clause 1 wherein said orifices have a diameter such that ratio of diameter of spherical section to said diameter of cylindrical area is approximately 1.1 to 2.5.
9. The device of clause 1 wherein said orifice utilizes intersection of a spherical section with a cylinder in order to create a cross section which represents a venturi effect.
10. A device comprising a multiplicity of orifices;
   said orifices comprise a spherical section which intersects a cylindrical section,
   wherein ratio of diameter of said spherical section and diameter of said cylindrical section are of a ratio up to a choked flow effect on product as it passes through said orifices.
11. The device of clause 10 wherein said orifices change size from a larger to a smaller cross-sectional area with vertical or concave sides having a sharp edge.
12. A device comprising a multiplicity of orifices which comprises a nozzle, venturi, or a restriction to flow which results in product acceleration with a corresponding pressure drop through said orifice.
13. The device of clause 1 wherein said device is used with solid products.
14. The device of clause 1 wherein said device is used for liquid products.
15. The device of clause 1 wherein said device is used for gaseous products.
16. The device of clause 1 wherein said device is placed in a hydraulic elbow.
17. The device of clause 1 wherein said device is used in a muzzle.
18. The device of clause 1 wherein said venturi effect creates an increase in acceleration and a decrease in pressure.
19. The device of clause 1 wherein said venturi effect creates a decrease in acceleration and an increase in pressure.
20. A method of creating a venturi effect comprising:
   flowing a product from a sphere or spherical section into a cylinder or from a cylinder into a sphere or a spherical section;
   creating a venturi effect on said product.

## Claims

1. A device comprising:
an orifice (72, 74), the orifice (72, 74) comprised of a spherical section (76) intersecting a cylinder (78) which creates a venturi effect;
said device having a single opening on top of said spherical section (76), a single opening between said spherical section (76) and said cylinder (78), a single opening on a bottom of said cylinder (78);
said orifice changing size from a larger diameter to a smaller diameter, such that there is a reduction in cross-sectional area through the orifice from the top of said spherical section (76) to the bottom of said cylinder (78).

2. The device of claim 1 wherein said venturi effect orients and/or aligns fibers of a product placed through said orifice.

3. The device of claim 1 wherein said venturi effect stretches a product drawn through said orifice.

4. The device of claim 1 wherein said orifice has a diameter such that ratio of diameter of said spherical section to diameter of said cylinder is approximately 1.1 to 2.5.

5. A device comprising a multiplicity of orifices (72, 74);
each of said orifices (72, 74) comprise a spherical section (76) which intersects a cylinder (78) which creates a venturi effect;
each of said orifices (72, 74) changing size from a larger diameter to a smaller diameter, such that there is a reduction in cross-sectional area through the orifice from the top of said spherical section (76) to the bottom of said cylinder (78).

6. The device of claim 1 wherein said device is used with solid products.

7. The device of claim 1 wherein said device is used for liquid products.

8. The device of claim 1 wherein said device is used for gaseous products.

9. A method of creating a venturi effect comprising:
flowing a product from a spherical section (76) into a cylinder (78) within an orifice (72, 74);
creating a venturi effect on said product;
accelerating said product through said orifice (72, 74).
